# EUROPÄISCHE PATENTSCHRIFT

(11) **EP 0 661 240 B1**
(45) Veröffentlichungstag und Bekanntmachung des Hinweises auf die Patenterteilung: **05.11.1997**
(21) Anmeldenummer: 94101310.4
(22) Anmeldetag: 18.02.1994
(51) Int. Cl.: C03C 11/00, C03B 19/08, C03B 19/10

(54) **Schaumglasgranulat und Verfahren zu seiner Herstellung**
Foam glass granulate and method for its manufacture
Granulate de verre mousse et procédé pour sa production

(30) Priorität: 16.12.1993 DE 4342996
(43) Veröffentlichungstag der Anmeldung: 05.07.1995
(73) Patentinhaber: Lias-Franken Leichtbaustoffe GmbH & Co. KG, 91352 Hallerndorf (DE)
(72) Erfinder: Stiebert, Monika, D-98693 Ilmenau (DE); Kleemann, Michael, D-98693 Ilmenau (DE); Eichel, Ralf, D-98693 Ilmenau (DE)
(74) Vertreter: Kessel, Egbert, Dipl.-Ing.

(56) Entgegenhaltungen:
- EP-A- 0 012 114
- EP-A- 0 084 594
- EP-A- 0 484 643
- DE-A- 4 023 561
- FR-A- 2 226 371
- GB-A- 1 164 609
- US-A- 3 234 034

## Beschreibung

Die Erfindung betrifft ein Schaumglasgranulat als Leichtzuschlag in vorzugsweise zementgebundenen Leichtmörteln, Leichtbetonen und Wärmedämmputzen und das Verfahren zu seiner Herstellung. Das Schaumglasgranulat wird vorwiegend aus Recyclingglas hergestellt.

Die Herstellung und die Zusammensetzung von Schaumgläsern, auch Blähgläser genannt, sind grundsätzlich bekannt. Mehrere Patentschriften machen darauf aufmerksam, daß für den Werkstoff Schaumglas auch solche Anwendungsgebiete offenstehen wie die Verwendung als Leichtzuschlag- und Isolierstoff in Beton.
Die Einsatzfähigkeit eines Schaumglasgranulates in Zementverbunden beinhaltet die Forderung nach einer hohen chemischen Resistenz gegenüber der alkalischen Porenwasserlösung. Diese ist sowohl beim Abbindevorgang als auch zeitweise oder permanent während klimatisch bedingter Durchfeuchtungen der Zementmatrix vorhanden. Die chemische Beständigkeit des Schaumglases selbst steht in enger Abhängigkeit von seiner oxidischen Zusammensetzung und der spezifischen Oberfläche, die während einer korrosiven Beanspruchung vorliegt.
Dieser Problematik wurde im bekannten Stand der Technik bisher nur geringere Bedeutung beigemessen, so daß die eingesetzten Blähgläser noch wesentliche nachteilige Eigenschaften bezüglich Ihrer Anwendung als Leichtbaustoffe besitzen.

In der US-Patentschrift Nr. 2 691 248 werden zur Herstellung eines Schaumglases unter anderem Gläser mit Boroxidgehalten von 5 - 15 Masse-% und SO₃- Gehalten bis 2,5 Masse-% empfohlen.
Ein Schaumglas aus Altglas mit bis zu 10 % B₂O₃ und bis 15 % Na₂O beschreibt die Schrift DE-OS 39 41 732.
Diese Schaumgläser besitzen durch das B₂O₃ zwar eine hohe Wasser- und Säurebeständigkeit, aber auch den Nachteil, daß sie in ihrer Alkalibeständigkeit wesentlich unter der Beständigkeit reiner Alkali-Silikat-Gläser liegen und damit keine günstigen Voraussetzungen für die Verwendung in zementgebundenen Betonen oder Mörteln bieten.
Die Patentschrift EP 0 484 643 gibt eine oxidische Zusammensetzung des Ausgangsglases an mit einem Mindestanteil von 15 Masse-% Alkalioxid (Na₂O+K₂O) und 4-8 Masse-% Erdalkalioxid (MgO+CaO+BaO).

Ein Al₂O₃-Gehalt in einem Alkalisilikatglas von 4,5 Masse-% in Verbindung mit Sintertemperaturen von 838°C bis 926°C ist in der US-PS 144 400 beschrieben. Dieses Glas besitzt in seiner Herstellung den Nachteil des relativ hohen Energiebedarfes bei der Wärmebehandlung.

Im Stand der Technik sind verschiedene Verfahren zur Herstellung von Schaumglasgranulaten bekannt. Sie können unterschieden werden nach der Art und Weise der Rohgranulaterzeugung, nach den verwendeten Bindemitteln und Granulierhilfskomponenten, im weiteren nach den Porengas bildenden Bläh- oder Treibmitteln sowie nach der Durchführung des Schäumungsvorgangs in einer thermischen Behandlung.
Eine Verfahrensrichtung der Rohgranulaterzeugung verwendet einen Aufschluß der gemahlenen Ausgangsstoffe mit Hilfe von Natrium- bzw. Natriummischsilikaten und/oder NaOH. Nach der chemischen Naßbehandlung wird die dabei erhaltene Schlempe getrocknet und granuliert und das Granulat anschließend verschäumt. Das zum Blähen verwendete Treibmittel wird entweder der Aufschlußmischung zugesetzt oder später der Schlempe zugefügt. Dabei wird unter dem Einfluß von Druck, Temperatur und Rührbewegungen die hohe basische Wirkung des selbst in Lösung gehenden Natriumsilikates auf die Glaspulveroberfläche genutzt.
Bei dem in der DE-PS 21 51 232 beschriebenen Verfahren wird die Rohgranulatbildung mittels Druckeinwirkung und Wärmebehandlung in einem Rollautoklaven durchgeführt. Dieses Verfahren wird durch das in der Patentschrift EP 0 052 693 angegebene Verfahren dahingehend verbessert, daß ein drucklos arbeitender beheizter Rührbehälter, der gleichzeitig als Granulator dient, zum Einsatz kommt. Eine Weiterentwicklung dieses Verfahrens ist nach der Schrift EP 0 484 643 bekannt, nach der Glas von Glasentladungsröhren verarbeitet wird, welches besonders leicht aufschließbar ist und zudem besser Eigenschaften des fertigen Schaumglases bewirkt. Nachteilig bei diesem Verfahren ist, daß sie nur eine diskontinuierliche Arbeitsweise gestatten.

Nach der DE OS 39 41 732 ist ein Verfahren bekannt, bei dem eine kontinuierliche Arbeitsweise durch den Einsatz eines Mischgranulators erreicht wird.

Nachteilig ist an allen bisher genannten Verfahren, daß ein hoher Wärmebedarf, ein zeitmäßig aufwendiger Aufschlußprozeß und damit bedingt eine hohe Zugabe an Natriumsilikat für die Granulation erforderlich ist.

Eine andere Verfahrensgruppe zur Herstellung von Schaumglasgranulaten nutzt die bekannte Preßtechnologie zur Rohgranulaterzeugung, wodurch höhere Rohgranulatdichten, die relative Unabhängigkeit der Granulatbildung von der Erzeugnisrezeptur und eine durchgängige kontinuierliche Arbeitsweise erzielt werden.

In der österreichischen Patentschrift Nr. 257 078 wird ein Verfahren vorgestellt, welches für das Verpressen glatte Walzen mit einem Walzenabstand verwendet, der der gewünschten Granulatkorngröße entspricht. Die Preßdrücke betragen 0,5 bis 100 MPa.
Diesem Verfahren haftet jedoch der Nachteil an, daß mit den genannten Drücken nicht die für den Schäumungsvorgang gewünschten relativen Granulatrohdichte von 70 % zu erreichen sind.

Die vorliegende Erfindung stellt sich die Aufgabe, unter vorzugsweiser Verwendung von Recyclingglas, insbesondere Behälterglas und Flachglas, ein Schaumglasgranulat chemisch beständiger Zusammensetzung gegenüber der alkalischen Beanspruchung in der Zementmatrix und gleichzeitig ein Verfahren anzugeben, das es gestattet, Schaumglas bestimmter Zusammensetzung mit gezielten Eigenschaften herzustellen.

Dabei ist der Einfluß der Alkalioxide Na₂O und K₂O im Zusammenspiel mit den stabilisierenden Oxiden Al₂O₃, CaO und MgO auf die chemische Beständigkeit des Schaumglasgranulates im Zement zu optimieren und die anteiligen Gehalte so festzulegen, daß schädigende Wirkungen auf die Zementmatrix vermieden werden.
Durch das erfindungsgemäße Verfahren soll gewährleistet werden, daß bei einer möglichst niedrig zu haltenden Sintertemperatur eine optimale Ausbildung der Porenstruktur und der damit verbundenen mechanischen und thermodynamischen Eigenschaften des Schaumglasgranulates erfolgt.

Diese Aufgabe wird durch das erfindungsgemäße Verfahren nach Anspruch 1 und die Glaszusammensetzung gelöst, die innerhalb folgender Bereiche oxidischer Gehalte für ein Schaumglasgranulat liegen, mit der Maßgabe, daß die Summe aller Bestandteile 100 Masse % beträgt:

| | |
|---|---|
| SiO | 68,5 - 75 Masse % |
| Na₂O | 10 - < 14 Masse % |
| K₂O | bis 2,5 Masse % |
| Al₂O₃ | 1,8 - 3 Masse % |
| CaO | > 6 - 11 Masse % |
| MgO | 0,5 - 4 Masse % |
| Fe₂O₃ | bis 0,5 Masse % |
| SO₃ | bis 0,4 Masse % |
| TiO₂ | bis 1 Masse % |
| BaO | 0,5 - 3 Masse % |
| Sonstige | bis 0,5 Masse % |

Es wurde gefunden, daß die Einhaltung des Na₂O- Gehaltes unter 14 Masse-% und des Al₂O₃- Gehaltes über 1,8 Masse-% für die Alkalibeständigkeit des Schaumglasgranulates in der Zementmatrix von besonderer Bedeutung ist. Die Begrenzung des Al₂O₃- Gehaltes auf maximal 3 Masse % dient vorwiegend dazu, die Sintertemperatur im Bereich von 750°C bis 850°C zu halten und damit Energie zu sparen.

Nach der Erfindung wird der Erdalkaligehalt von 8 bis 15 Masse % und ein Alkaligehalt von weniger als 15 Masse % angestrebt. Darin eingeschlossen ist auch die Minimierung des für die Granulation und Schäumung notwendigen Wasserglaszusatzes (Natriumsilikat).

Zuschläge üblicher aufgemahlener Glasrohstoffe wie z.B. Feldspalte (Al₂O₃ und SiO₂), Sande (SiO₂), Tonerdehydrat (AL(OH)₃) oder in Form von Kaolinen, Tonen (Alumosilikate) erhöhen die chemische Beständigkeit, erfordern jedoch höhere Sintertemperaturen und verschlechtern die Porenstruktur sowie die Druckfestigkeit. Daher betragen erfindungsgemäß die maximalen Beimengungen in Summe 2-5 Masse-% bezogen auf das Glas.

Die Herstellung der erfindungsgemäßen Zielsummensetzung erfolgt durch ein definiertes Mischen und gemeinsames Aufmahlen von geeigneten Glaschargen und Zusätzen. Folgende Zusätze, die schädliche Auswirkungen des Schaumglasgranulates in der Zementmatrix hervorrufen können, sind auszuschließen:
Nitrate
Sulfate und andere Schwefelverbindungen
Chloride
Phosphate
fluorhaltige Verbindungen
borhaltige Verbindungen

Ebenso werden Gläser ausgeschlossen, deren Zusammensetzungen selbst oder in Kombination mit anderen Gläsern ungenügende Alkalibeständigkeit in der Zementmatrix bewirken, insbesondere werden borhaltige und/oder fluorhaltige Gläser nicht für die Herstellung des erfindungsgemäßen Schaumglases eingesetzt.

Das Schaumglasgranulat weist in Abhängigkeit von der Korngröße nachstehende Eigenschaften auf:

| | |
|---|---|
| Wärmeleitfähigkeit: | 0,05-0,060 W/(m*K) |
| Dichte: | 200-300 kg/m³ |
| Schüttdichte: | 100-250 kg/m³ |
| Porendurchmesser: | 0,0001-0,5 mm |
| Gasinhalte der Poren: CO₂, CO, N₂, H₂, H₂O, O₂, Ar. | |

Das erzeugte Schaumglasgranulat ist gekennzeichnet durch die Ausbildung einer über den gesamten Kornquerschnitt gleichmäßigen Porenverteilung.

Um erfindungsgemäß ein mechanisch stabiles Rohgranulat zu erhalten, wird über ein Kompaktier- und Zerkleinerungsverfahren durch die Druckeinwirkung eine notwendig gute Verdichtung und Benetzung aller Glasteilchen bei gleichzeitiger Minimierung des Wasserglaszusatzes erreicht.

Die erfindungsgemäß muldenförmig gestalteten profilierten Preßwalzen ermöglichen eine relativ gleichmäßige Verdichtung des Preßgutes über eine Durchwalkung des in den Walzspalt eingezogenen Materials.

Das erfindungsgemäße Verfahren ist gekennzeichnet durch die Anwendung von preßdrücken von 100-200 MPa und die Verwendung von Glaspulver der Körnung kleiner 63 µm, vorzugsweise kleiner 40µm, in Kombination mit einem Wasserglaszusatz (37-40 Be) von 5-10 Masse-% und einem kohlenstoffhaltigen Treibmittel, welches sich vorzugsweise im Wasserglas löst. Es entsteht erfindungsgemäß ein Rohgranulat mit einer Rohdichte von ca. 1,5-1,8 g/cm³, das eine sehr feine und homogene Verteilung von Primärporen und Treibmitteln besitzt.

Mit Hilfe des Schäumungsprozesses, der vorzugsweise in einem Drehrohrofen bei Temperaturen zwischen 700 und 850 °C, vorzugsweise 750°C bis 800°C, und Verweilzeiten von 3 bis 30 Minuten, vorzugsweise 15 Minuten, durchgeführt wird, erfolgt die Porenbildung im Durchmesserbereich von 0,0001 mm bis 0,5 mm. Der Hauptteil der Poren ist geschlossenzellig, ihr Durchmesser beträgt weniger als 0,1 mm. Die Schüttdichte des erfindungsgemäßen Schaumglasgranulates liegt je nach Körnung zwischen 100 und 250 kg/m³.
Der Schäumungsvorgang wird wesentlich durch den Viskositätsverlauf im Verarbeitungsbereich der sich aus den Ausgangskomponenten neubildenden Glasmatrix beeinflußt. Hierbei trägt das Oxid BaO in den Konzentrationen von vorzugsweise mehr als 0,5 Masse % und weniger als 3 Masse % dazu bei, das Temperaturintervall der für die Schäumung günstigen Viskosität zu verbreitern.
Das Temperaturregime beinhaltet ebenfalls eine definierte Abkühlung der Granalien, um damit zu große thermische Materialspannungen zu vermeiden.

Die Erfindung soll im folgenden an einem Ausfüh-rungsbeispiel näher erläutert werden:

Zwei Ausgangsgläser wurden in geeigneter Weise vermischt, um die obengenannte Zielzusammensetzung zu erreichen:

| | 33,33 Masse % Glas 1 % | 66,67 Masse% Glas 2 % | Vermischt % |
|---|---|---|---|
| SiO₂ | 69,39 | 72,89 | 71,72 |
| Na₂O | 12,49 | 11,55 | 11,86 |
| K₂O | 3,42 | 0,99 | 1,80 |
| Al₂O₃ | 3,22 | 2,21 | 2,55 |
| CaO | 6,45 | 9,93 | 8,77 |
| MgO | 2,42 | 2,03 | 2,16 |
| Fe₂O₃ | 0,00 | 0,30 | 0,20 |
| SO₃ | 0,00 | 0,01 | 0,01 |
| TO₂ | 0,00 | 0,05 | 0,03 |
| BaO | 2,62 | 0,00 | 0,87 |
| P₂O₅ | 0,00 | 0,02 | 0,01 |
| MnO | 0,00 | 0,02 | 0,01 |
| Summe | 100,00 | 100,00 | 100,00 |

Dieses Glas wurde auf eine Feinheit von kleiner 40µm vermahlen, mit 10 Masse-% Wasserglas (37-40 Be) und 0,3 Masse-% Zucker innig vermischt und mit Preßdrücken von ca. 150 MPa über eine Formmuldenwalzenpresse verarbeitet. Die Zerkleinerung der Schülpen erfolgte mittels einer Hammermühle. Das so gewonnene Gut wurde fraktioniert und das Über- und Unterkorn in den Arbeitskreislauf zurückgeführt. Die Sinterung und Schäumung fand in einem Drehrohrofen bei 770°C und 15 Minuten statt. Daraufhin erfolgte eine definierte Abkühlung des Materials, um thermische Spannungen zu vermeiden.

Die chemische Granulatzusammensetzung betrug bei Vernachlässigung des Glühverlustes:

| | Masse-% |
|---|---|
| SiO₂ | 71,94 |
| Na₂O | 12,27 |
| K₂O | 1,73 |
| Al₂O₃ | 2,45 |
| CaO | 8,43 |
| MgO | 2,08 |
| Fe₂O₃ | 0,19 |
| SO₃ | 0,01 |
| TiO₂ | 0,03 |
| BaO | 0,84 |
| P₂O₅ | 0,01 |
| MnO | 0,01 |
| Summe | 100,00 |
| Gasinhalte der Poren: CO₂, CO, N₂, H₂, H₂O, O₂, Ar | |

Das auf diese Weise hergestellte Schaumglasgranulat besitzt vorzugsweise folgende physikalischen Eigenschaften:

| | | |
|---|---|---|
| Wärmeleitfähigkeit: | | 0,06 W/(m*K) |
| Dichte: | | 300 kg/m³ |
| Schüttdichte je Kornfraktion | 0,5-1 mm: | 250 kg/m³ |
| | 1-2 mm : | 225 kg/m³ |
| | 2-4 mm : | 180 kg/m³ |
| | 4-8 mm : | 150 kg/m³ |
| Porendurchmesser: | | 0,0001-0,1 mm |
| mittlerer Porendurchmesser: (Messung mit Hg-Porosimeter) | | 0,0005 mm |

## Patentansprüche

1. Verfahren zur Herstellung von als Leichtzuschlag dienendem Schaumglasgranulat aus gemahlenem Glas, mindestens einem Bindemittel und mindestens einem Blähmittel,
bei dem Recyclingglas aus verschiedenen Chargen geeigneter Gläser und Zusatzkomponenten zu einer Zielzusammensetzung gemischt werden,
bei dem diese Mischung vermahlen sowie anschließend mit dem Bindemittel und dem Blähmittel innig vermischt und in einem Formgebungsprozeß behandelt wird, so daß Rohgranulat anfällt,
bei dem das Rohgranulat in einem Wärmebehandlungsverfahren mit gesteuertem Temperaturregime geschäumt wird, und
bei dem eine chemische Glaszusammensetzung der folgenden oxidischen Bestandteile mit der Maßgabe vorliegt, daß die Summe aller Bestandteile 100 Masse-% beträgt: SiO₂, Na₂O, K₂O, Al₂O₃, CaO, MgO, Fe₂O₃, BaO, Sonstige,
wobei der Alkalioxidgehalt (Na₂O und K₂O) in der Summe begrenzt ist,
dadurch gekennzeichnet,
daß der Alkalioxidgehalt weniger als 15 Masse-% beträgt und die chemische Zusammensetzung des hergestellten Schaumglasgranulats im Bereich folgender Gehalte liegt:
| | |
|---|---|
| SiO₂ | 68,5 - 75 Masse-% |
| Na₂O | 10 - < 14 Masse-% |
| K₂O | bis 2,5 Masse-% |
| Al₂O₃ | 1,8 - 3 Masse-% |
| CaO | > 6 - 11 Masse-% |
| MgO | 0,5 - 4 Masse-% |
| Fe₂O₃ | bis 0,5 Masse-% |
| SO₃ | bis 0,4 Masse-% |
| TiO₂ | bis 1 Masse-% |
| BaO | 0,5 - 3 Masse-% |
| Sonstige | bis 0,5 Masse-%, |
daß die in dem Forgebungsprozeß zu behandelnde Mischung mittels Preßwalzen zu Preßlingen gepreßt wird und die Preßlinge zu Rohgranulat zerkleinert werden, und
daß die Preßwalzen mit Preßdrücken von > 100 bis 200 MPa arbeiten.

2. Verfahren nach Anspruch 1, dadurch gekennzeichnet, daß bei der Glaszusammensetzung der Erdalkalioxidgehalt (CaO, MgO und BaO) > 8 bis 15 Masse-% beträgt.

3. Verfahren nach Anspruch 1 oder 2, dadurch gekennzeichnet, daß die Körnung der vermahlenen Mischung weniger als 63 µm, vorzugsweise weniger als 40 µm beträgt.

4. Verfahren nach Anspruch 1, 2 oder 3, dadurch gekennzeichnet, daß die Wärmebehandlung des Rohgranulats im Temperaturbereich von 700°C bis 850°C, vorzugsweise von 750°C bis 800°C, über eine Dauer von 3 bis 30 Minuten, vorzugsweise 15 Minuten, durchgeführt wird und die Abkühlung des verschäumten Granulats definiert gesteuert wird.

5. Verfahren nach einem der vorhergehenden Ansprüche, dadurch gekennzeichnet, daß es auf die Herstellung eines Schaumglasgranulats mit den nachfolgenden physikalischen Eigenschaften eingestellt ist: Wärmeleitfähigkeit: 0,05-0,060 W/(m.K), Dichte: 200-300 kg/m³ und Schüttdichte: 100-250 kg/m³.

6. Verfahren nach einem der vorhergehenden Ansprüche, dadurch gekennzeichnet, daß es auf die Herstellung eines Schaumglasgranulats eingestellt ist, bei dem die Oberfläche vorwiegend geschlossenporig ist und im Kern Poren im Durchmesserbereich von 0,0001 mm bis 0,5 mm, vorzugsweise 0,0001 mm bis 0,1 mm vorliegen.

## Claims

1. A process for the preparation of foam glass granules for use as a lightweight aggregate and comprising ground glass, at least one binder and at least one expanding agent, wherein recycling glass from different batches of suitable glass and additives are mixed to form a target composition, wherein this mixture is ground and then intimately mixed with the binder and the expanding agent and is treated in a forming process, producing raw granules, wherein the raw granules are foamed in a heat-treatment process with a controlled temperature regime, and wherein a chemical glass composition with the following oxidic constituents is obtained, with the proviso that the sum of all the constituents is 100 wt.%: SiO₂, Na₂O, K₂O, Al₂O₃, CaO, MgO, Fe₂O₃, BaO, other, the total alkali oxide content (Na₂O and K₂O) being restricted, characterised in that the alkali oxide content is less than 15 wt.% and the constituents of the chemical composition of the prepared foam glass granules are in the following ranges:
| | |
|---|---|
| SiO₂ | 68.5 - 75 wt.% |
| Na₂O | 10 - < 14 wt.% |
| K₂O | up to 2.5 wt.% |
| Al₂O₃ | 1.8 - 3 wt.% |
| CaO | > 6 - 11 wt.% |
| MgO | 0.5 - 4 wt.% |
| Fe₂O₃ | up to 0.5 wt.% |
| SO₃ | up to 0.4 wt.% |
| TiO₂ | up to 1 wt.% |
| BaO | 0.5 - 3 wt.% |
| Other | up to 0.5 wt.%, |
in that the mixture to be treated in the forming process is pressed into mouldings by means of press rolls and the mouldings are comminuted into raw granules, and in that the press rolls operate at pressing pressures of > 100 to 200 MPa.

2. A process according to claim 1, characterised in that the alkaline-earth oxide content (CaO, MgO and BaO) in the glass composition is > 8 to 15 wt.%.

3. A process according to claim 1 or 2, characterised in that the grain size of the ground mixture is less than 63 µm, preferably less than 40 µm.

4. A process according to claim 1, 2 or 3, characterised in that the heat treatment of the raw granules is carried out in the temperature range from 700°C to 850°C, preferably 750°C to 800°C, for a period of 3 to 30 minutes, preferably 15 minutes, and the cooling of the foamed granules is precisely controlled.

5. A process according to any one of the preceding claims, characterised in that it is used for the preparation of foam glass granules with the following physical properties: thermal conductivity: 0.05 to 0.060 W/(mK), density: 200 - 300 kg/m³ and bulk density: 100 - 250 kg/m³.

6. A process according to any one of the preceding claims, characterised in that it is used for the preparation of foam glass granules, of which the surface predominantly has closed pores and the core has pores in the diameter range from 0.0001 mm to 0.5 mm, preferably 0.0001 mm to 0.1 mm.

## Revendications

1. Procédé pour la préparation de granulat de verre mousse servant d'agrégat léger constitué de verre broyé, d'au moins un liant et d'au moins un agent de gonflement,
dans lequel on mélange du verre recyclé provenant de différentes charges de verres appropriés et des constituants d'additifs en une composition ciblée,
dans lequel on broie ce mélange ainsi qu'on le mélange intimement ensuite avec le liant et l'agent de gonflement et on le traite dans un processus de façonnage, de telle sorte que du granulat brut est produit,
dans lequel on fait mousser le granulat brut dans un procédé de traitement thermique avec un régime de température réglé, et
dans lequel une composition chimique de verre des constituants d'oxydes suivants est présente avec la condition que la somme de tous les constituants soit de 100 % en masse : SiO₂, Na₂O, K₂O, Al₂O₃, CaO, MgO, Fe₂O₃, BaO, autres,
la teneur en oxydes d'alcalis (Na₂O et K₂O) étant limitée dans la somme,
caractérisé en ce que la teneur en oxydes d'alcalis est inférieure à 15 % en masse et la composition chimique du granulat de verre mousse préparé se trouve dans le domaine des teneurs suivantes :
| | |
|---|---|
| SiO₂ | 68,5 - 75 % en masse |
| Na₂O | 10 - <14 % en masse |
| K₂O | jusqu'à 2,5 % en masse |
| Al₂O₃ | 1,8 - 3 % en masse |
| CaO | > 6 - 11 % en masse |
| MgO | 0,5 - 4 % en masse |
| Fe₂O₃ | jusqu'à 0,5 % en masse |
| SO₃ | jusqu'à 0,4 % en masse |
| TiO₂ | jusqu'à 1 % en masse |
| BaO | 0,5 - 3 % en masse |
| autres | jusqu'à 0,5 % en masse, |
en ce que l'on comprime le mélange à traiter dans le processus de façonnage au moyen de rouleaux compresseurs en des comprimés et en ce que l'on broie les comprimés en granulat brut et en ce que les rouleaux compresseurs fonctionnent à des pressions de compression de >100 à 200 MPa

2. Procédé selon la revendication 1, caractérisé en ce que la teneur en oxydes d'alcalino-terreux (CaO, MgO et BaO) est > 8 jusqu'à 15 % en masse pour la composition de verre.

3. Procédé selon la revendication 1 ou 2, caractérisé en ce que la granulométrie du mélange broyé est inférieure à 63 µm, de préférence inférieure à 40 µm.

4. Procédé selon la revendication 1, 2 ou 3, caractérisé en ce que le traitement thermique du granulat brut est réalisé dans un domaine de températures de 700°C à 850°C, de préférence de 750°C à 800°C sur une durée de 3 à 30 min, de préférence de 15 min et en ce que le refroidissement du granulat transformé en mousse est réglé de manière définie.

5. Procédé selon l'une quelconque des revendications précédentes, caractérisé en ce que l'on ajuste la préparation d'un granulat de verre mousse avec les caractéristiques physiques suivantes : conductibilité thermique : 0,05-0,060 W/(m.K), densité : 200-300 kg/m³ et densité apparente 100-250 kg/m³.

6. Procédé selon l'une quelconque des revendications précédentes, caractérisé en ce que l'on ajuste la préparation d'un granulat de verre mousse pour lequel la surface est de manière prédominante à pores fermés et pour lequel des pores dans le domaine de diamètres de 0,0001 mm à 0,5 mm, de préférence de 0,0001 mm à 0,1 mm se trouvent dans le noyau.
